# EUROPEAN PATENT SPECIFICATION

(11) **EP 1 818 218 B1**
(45) Date of publication and mention of the grant of the patent: **10.07.2013**
(21) Application number: 07075109.4
(22) Date of filing: 06.02.2007
(51) Int. Cl.: B60R 9/042

(54) **A device for carrying objects**
Vorrichtung zum Tragen von Objekten
Dispositif de transport d'objets

(30) Priority: 10.02.2006 IT MO20060044
(43) Date of publication of application: 15.08.2007
(73) Proprietor: Fami S.R.L., 36027 Rosà (VI) (IT)
(72) Inventor: Camellini, Giancarlo, 41014 Castelvetro (Modena) (IT)
(74) Representative: Gotra, Stefano

(56) References cited:
- EP-A1- 1 127 745
- EP-A2- 1 086 857
- WO-A-2006/013434
- GB-A- 2 385 572

## Description

In particular, the invention relates to a device for carrying objects usable on motor vehicles, associable to the roof thereof in order to carry objects of any type, for example ladders etc.

As is known, devices for carrying objects are constituted by a fixed frame, being flat and engaged on the roof of the vehicle by means of special fastening organs.

The fixed frame has mounted thereon a mobile frame which supports the object to be transported; the mobile frame is slidable on the fixed frame along a horizontal movement direction.

In particular, the mobile frame can be moved manually from a rest condition to a work condition in which the operator can easily act on the mobile frame in order to have access to the object carried thereon.

The mobile frame in the rest condition is arranged horizontally within the overall dimensions of the fixed frame. The device in this configuration is very compact and can easily be transported by the vehicle.

In the work condition, the mobile frame is made to slide along the fixed frame towards the back part of the vehicle. When the mobile frame is completely extracted it is rotated downwards in order to be arranged transversally of the lie plane of the fixed frame. In this situation the mobile frame is arranged vertically with an end thereof resting on the ground.

Known-type devices further exhibit a shock-absorbing element to brake the movement of the mobile frame from the rest position to the work position.

Such a type of device is disclosed in GB 2385572.

Thanks to this, the mobile frame is rotated slowly to prevent it from brusquely falling towards the ground.

The devices for carrying objects are further provided with a recall spring engaged to the fixed frame and the mobile frame, which spring is solicited in traction when the mobile frame is in the work condition. The recall spring facilitates the closure operation of the mobile frame when it is to be brought back into the rest position thereof on top of the vehicle.

Generally the mobile frame, in the work condition, is maintained stably in position by means of special hook organs. In this way, the mobile frame remains vertical to enable the operator to work without the risk that the recall spring might suddenly return the mobile frame into the rest position.

The above-described devices for carrying objects, however, have important drawbacks.

These drawbacks are concerned with the hooking organs which are generally constituted by a fastener arranged above the vehicle, between the end of the mobile frame hinged to the fixed frame and the fixed frame itself. This fastener is difficult to reach for the user, who, while actually engaged in moving the mobile frame, has at the same time to work the fastener located on the vehicle roof.

Also known are hooking organs which obviate the drawback. The hooking organs are constituted by a hook projecting from the back portion of the motor vehicle and are engageable to the end of the mobile frame which goes to rest on the ground.

This type of hooking organ also presents an important drawback. The hook that projects from the vehicle is very unwieldy and dangerous when the vehicle is in motion.

A further drawback is the unreliability of the hooking organs which, if wrongly applied, can unhook, with the result that the spring recalls the mobile frame from the work condition into the rest condition very violently, posing very considerable safety risks to the user.

The aim of the present invention is to solve the above-mentioned problems by providing a device for carrying objects.

In particular, the aim of the present invention is to keep the mobile frame in the respective rest condition, stably and without the use of hooking organs.

These aims and more besides are realised by the invention, as it is characterised in the claims that follow.

Further characteristics and advantages of the present invention will better emerge from the detailed description that follows of a preferred embodiment thereof, provided by way of non-limiting example with the aid of the accompanying figures of the drawings, in which:
Figure 1 is a side elevation of a device for carrying objects of the present invention, mounted on a motor vehicle;
Figure 2 is a side elevation, with some parts removed better to evidence others, of the device for carrying objects of figure 1, in a rest position;
Figure 3 is a side elevation of a back portion of the motor vehicle illustrated in figure 1 and of the device for carrying objects in an intermediate state of movement;
Figure 3a illustrates an enlargement of a constructional detail of the device for carrying objects of figure 3;
Figure 4 is a side elevation of a back portion of the motor vehicle of figure 1, and of the device for carrying objects in a work position;
Figure 4a is an enlarged view of a constructional detail of the device for carrying objects of figure 4.

With refernce to the above figures of the drawings, 1 denotes in its entirety a device for carrying objects of the present invention.

In particular, the device 1 is usefully applied on motor vehicles 2 which have to transport unwieldy objects (not illustrated in the figures of the drawings) such as ladders, or objects of various nature which cannot be stowed inside the vehicle itself.

In the accompanying figures of the drawings, purely by way of example, a device 1 associated to the roof of a motor vehicle 2 is illustrated. However, the device for carrying objects can be used in various applications according to the various needs.

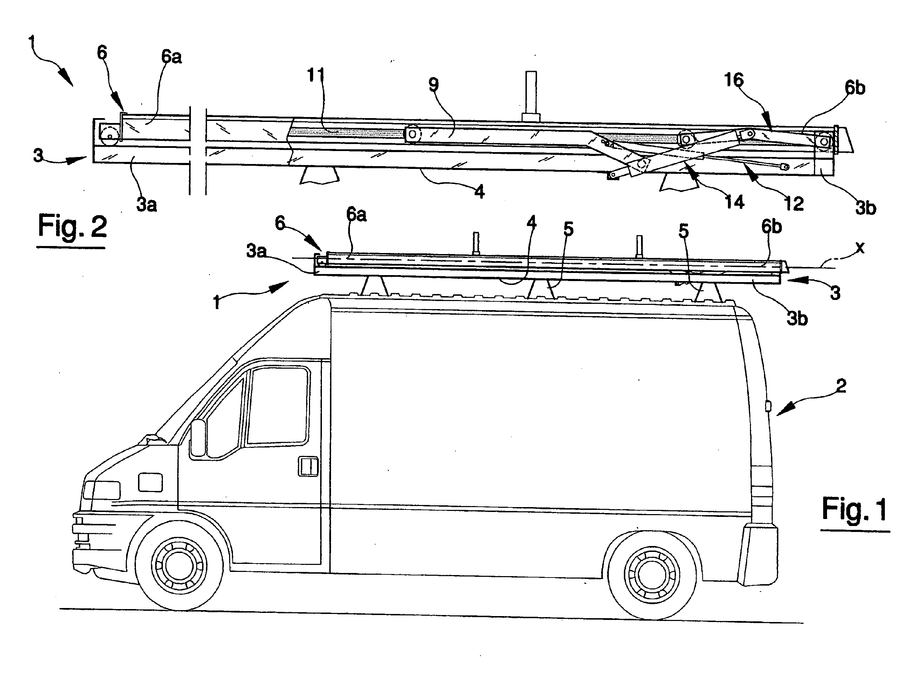

In particular, the device for carrying objects 1 is constituted by a fixed support frame 3 having a substantially flat conformation, with a rectangular peripheral development. The fixed frame 3 develops along a respective horizontal lie plane and exhibits a first end 3a which is arranged at a front zone of the motor vehicle 2 and a second end 3a, opposite the first end 3a, which is located at a back zone of the motor vehicle 2. As is clearly illustrated in figure 1, the fixed frame 3 exhibits a longitudinal development corresponding to the development of the longitudinal axis of the vehicle 2.

The fixed frame 3 further exhibits a lower surface 4 facing the roof of the motor vehicle 2. At least an engaging element 5 develops from the lower surface 4, which engaging element 5 is not described in detail as it is of known type, and which element 5 constrains the fixed frame 3 to the roof of the motor vehicle 2.

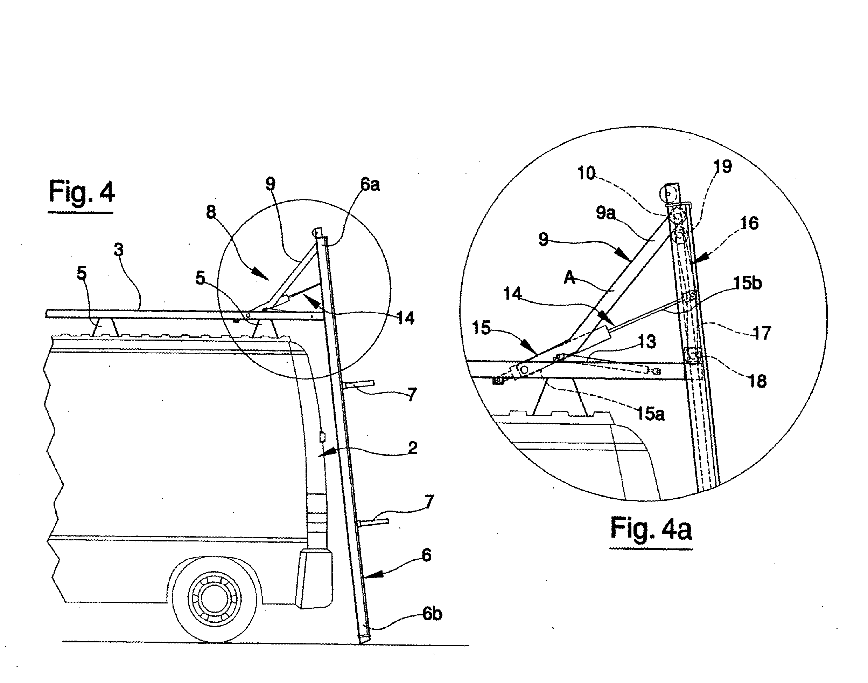

The device 1 further comprises a mobile frame 6 associated to the fixed frame 3 and slidable thereon between a non-use position (figure 1) in which the mobile frame 6 is comprised in the overall dimension of the fixed frame 3 and a use position (figure 4) in which the mobile frame 6 projects from the fixed frame 3.

In particular the mobile frame 6 has a flat conformation and a substantially rectangular peripheral development which is smaller than the development of the fixed frame 3, so that the mobile frame 6 is contained within the fixed frame 3 when in the non-use position. The mobile frame 6 further exhibits a first end 6a which, in the non-use position, is arranged at the first end 3a of the fixed frame 3 and a second end 6b located at the second end 3b of the fixed frame (see figures 1 and 2).

Of note is the fact that the mobile frame 6 in the respective non-use position is parallel above the fixed frame 3 and lies on the same horizontal lie plane as the fixed frame 3.

In the use position (figures 4, 4a), the mobile frame 6 projects posteriorly from the motor vehicle 2 and extends perpendicular to the horizontal lie plane of the fixed frame 3. In this situation, the first end 6a of the mobile frame 6 is arranged at the second end 3b of the fixed frame 3 and above the fixed frame 3, while the second end 6b is neared to the ground.

The mobile frame 6 further exhibits at least an engaging portion 7 to removably constrain an object, such as a ladder, on the mobile frame 6.

For example, the engaging portion 7 is constituted by a hook of known type and therefore not described in detail, in order for the object to be constrained to the mobile frame 6.

The device 1 further exhibits means for moving 8 interposed between the mobile frame 6 and the fixed frame 3 in order to move the mobile frame 6 along a respective direction X.

The means for moving 8 are constituted by an arm 9 exhibiting a first end 9a provided with a wheel 10, and a second end 9b rotatably associated to the fixed frame 3 in order to enable the arm 9 to rotate. In particular, the arm 9 is rotatable about a transversal axis to the movement direction X between a first position, corresponding to the non-use position of the mobile frame 6, in which it develops along the lie plane of the fixed frame 3 (see figure 2) and a second position, corresponding to a use position of the mobile frame 6, in which it projects transversally from the lie plane of the fixed frame 3 (see figure 4).

Advantageously, the arm 9 is constituted by a bar having a substantially long and slightly arched conformation. As illustrated in the accompanying figures of the drawings, the arm 9 exhibits an arched median portion which defines two contiguous and transversal tracts A and B.

The wheel 10 associated to the first end 9a of the arm 9 is slidable during the movement of the mobile frame 6 along a guide 11 afforded in the mobile frame 6 and extending along the respective longitudinal development.

The means for moving 8 further comprise a thrust element 12 associated to the fixed frame 3 and to the arm 9 to move the mobile frame 6 from the use position to the non-use position.

In particular, the thrust element 12 is constituted by an elastic spring 13 having a first end 13a associated to the second end 3b of the fixed frame 3, and a second end 13b opposite the first end 13a which is associated to the tract B of the arm 9 close to the fixed frame 3.

Preferably the spring 13 is constituted by a compressible shock absorber in the use position of the mobile frame 6 and extensible into the non-use position.

The spring 13 advantageously favours the movement of the mobile frame 6 when the mobile frame 6 is to be returned to above the vehicle.

The device 1 further exhibits a shock absorber 14 which opposes the movement of the mobile frame 6 from the use position to the non-use position.

In greater detail, the shock absorber 14 comprises a double-acting piston 15 exhibiting a cylindrical chamber 15a hinged to the fixed frame 3 and a stem 15b which is slidable in the cylindrical chamber 15a and hinged to a carriage 16.

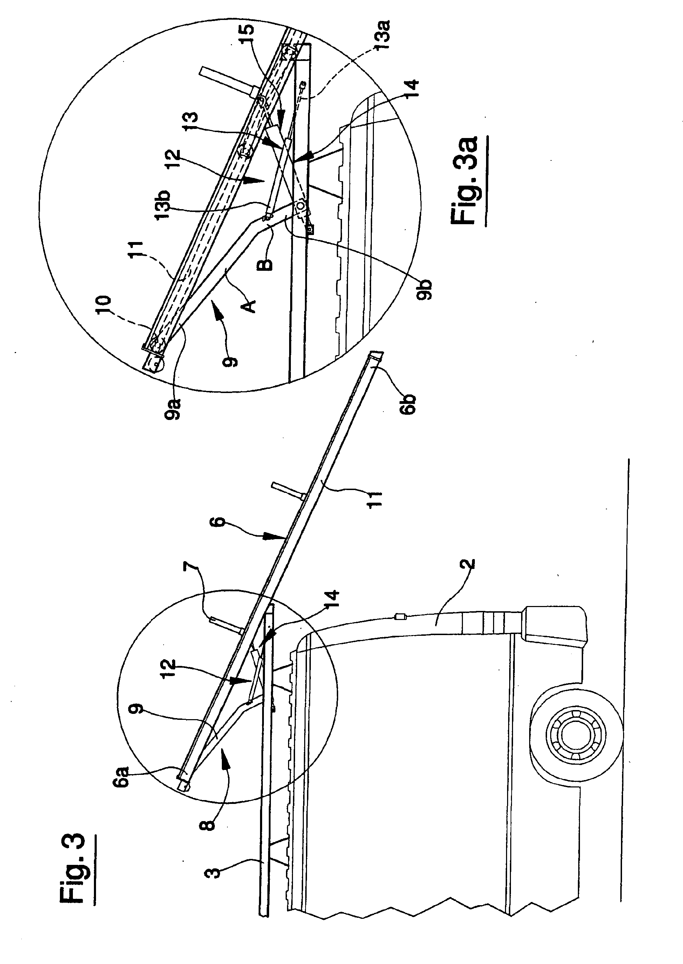

As is better illustrated in figures 3a and 4a, the carriage 16 is constituted by a crossbar 17 housed in the guide 11 and exhibiting at either opposite end thereof a first wheel 18 and a second wheel 19, both running in the guide 11.

In particular, the first wheel 18 is hinged to the second end 3b of the fixed frame 3 and to the crossbar 17 in order that the crossbar 17 is rotatable during the movement of the mobile frame 6. In other words, when the mobile frame 6, slidable on the carriage 16, is tilted into the vertical position it also transports the carriage 16, which rotates about the second end 3b of the fixed frame 3.

Note that the stem 15b is hinged on the crossbar 17 at a median zone of the crossbar 17 itself.

In this way, when the mobile frame 6 is neared to the fixed frame 3 in order to be arranged in the non-use position, the stem 15b is inserted internally of the cylindrical chamber 15a; while, when the mobile frame 6 is distanced from the fixed frame 3 in order to be arranged in the use position, the stem 15b is extracted from the cylindrical chamber 15a.

The movement of the mobile frame 6 is advantageously braked by the piston 15 during the displacement from the non-use position to the use position, and from the use position to the non-use position.

In use, starting from the non-use position of the mobile frame 6, the operator manually pulls the mobile frame 6 towards a back zone of the motor vehicle 2. The mobile frame 6 is made to run along the wheels 10, 18 and 19, projecting outside the fixed frame 3.

When the mobile frame 6 is almost completely extended it is made to rotate, nearing the second end 6b to the ground. In this situation the spring 13 is compressed and the piston 15 slows the movement of the mobile frame 6 which tends to fall towards the ground.

When the mobile frame 6 is in the respective use position, the operator can act on the engagement portion 7 to remove the object supported thereon.

In this situation, the mobile frame 6 remains in the respective use position, given the weight of the frame 6 itself and the action of the double-acting piston 15 which opposes the action of the thrust element 12.

Even when the supported object is detached from the mobile frame 6, the piston 15 overcomes the recall action of the thrust element 12, maintaining the mobile frame 6 in the use position.

To return the mobile frame 6 into the non-use position, the operator raises the mobile frame 6, collaborating with the thrust action of the thrust element 12, which returns the mobile frame 6 into the relative non-use position.

The present invention enables hook elements, manually activated when the mobile frame 6 is in the use position, advantageously to be eliminated.

The double-acting piston 15 contrasts the action of the thrust element, maintaining the mobile frame 6 in the respective use position up to when the operator lifts the mobile frame 6.

Consequently, the device 1 is less unwieldy, lighter and easily mountable on the vehicle 2.

## Claims

1. A device for carrying objects, comprising:
a fixed support frame (3);
a mobile frame (6) associated to the fixed frame (3) and sliding thereon between a non-use position in which the mobile frame (6) is comprised within the overall dimension of the fixed frame (3) and a use position in which the mobile frame (6) projects from the fixed frame (3), the mobile frame (6) further exhibiting at least an engagement portion (7) for removably constraining an object on the mobile frame (6); and
means for movement (8) interposed between the mobile frame (6) and the fixed frame (3) in order to move the mobile frame (6) along a respective direction (X);
**characterised in that** it further comprises an absorbing organ (14) for opposing the movement of the mobile frame (6) from a use position to a non-use position, such that the mobile frame (6) remains in the use position given to the weight of the frame (6) itself and the action of the absorbing organ (14).

2. The device of claim 1, **characterised in that** the fixed frame (3) and the mobile frame (6) respectively exhibits a first end (3a, 6a) and a second end (3b, 6b) opposite the first end (3a, 6a): the mobile frame (6) in the non-use position thereof having the first en d(6a) and the second end (6b) respectively arranged at the first end (3a) and the second end (3b) of the fixed frame (3), the mobile frame (6) in the use position having the first end (6a) thereof arranged at the second end (3b) of the fixed frame (3).

3. The device of any one of the preceding claims, **characterised in that** the fixed frame (3) and the mobile frame (6) lie on respective development planes which are parallel to the non-use position and on respective transversal development planes in the use position.

4. The device of any one of the preceding claims, **characterised in that** the means for movement (8) comprise an arm (9) exhibiting a first end (9a) provided with a wheel (10) which runs on a guide (11) afforded in the mobile frame (6) and extending along the longitudinal development of the mobile frame (6), and a second end (9b) rotatably associated to the fixed frame (3) and rotating about an axis which axis is transversal to the movement direction (X); the arm (9) being rotatable about the axis between a first position, corresponding to the non-use position of the mobile frame (6), in which the arm (9) develops along the lie plane of the fixed frame (3), and a second position corresponding to the use position of the mobile frame (6), in which the arm (9) projects transversally from the lie plane of the fixed frame (3).

5. The device of claim 4; **characterised in that** the means for movement (8) further comprise a thrust element (12) associated to the fixed frame (3) and to the arm (9), which thrust element (12) moves the mobile frame (6) from the use position to the non-use position.

6. The device of claim 5, **characterised in that** the thrust element (12) comprises an elastic spring (13) having a first end (13a) which is associated to the second end (3b) of the fixed frame (3) and a second end (13b), opposite the first end (3a), which is associated to a median zone of the arm (9) defined between the first end (9a) and the second end (9b) of the arm (9); the spring (13) being compressed in the use position of the mobile frame (6).

7. The device of any one of claims from 4 to 6, **characterised in that** the means for movement (8) further comprise a carriage (16) exhibiting: a first wheel (18) hinged to the fixed frame (3) at the second end (3b) thereof and running in the guide (11) of the mobile frame (6); a second wheel (19), opposite the first wheel (18) and also running along the guide (11) of the mobile guide (6); and a crossbar (17) associated to the first associated to the first wheel (18) and the second wheel (19).

8. The device of claim 7, **characterised in that** the absorbing organ (14) comprises a piston (15) exhibiting a cylindrical chamber (15a) hinged to the fixed frame (3) and a stem (15b) which is slidable in the cylindrical chamber (15a) and hinged to the crossbar (17).

9. The device of claim 8, **characterised in that** the piston (15) is a double-acting piston for braking the movement of the mobile frame (6) from the non-use position thereof to the use position thereof and from the use position thereof to the non-use position thereof.

10. The device of claim 8 or 9, **characterised in that** in the non-use position of the mobile frame (6) the carriage (16) is neared to the fixed frame (3) in order to insert the stem (15b) in the cylindrical chamber (15a), and in the use position of the mobile frame (6) the carriage (16) is distanced from the fixed frame (3) in order to extract the stem (15b) from the cylindrical chamber (15a).

11. The device of any one of the preceding claims, **characterised in that** the fixed frame (3) and the mobile frame (6) exhibit a flat conformation and a substantially rectangular peripheral development.

12. The device of any one of the preceding claims, **characterised in that** the engaging portion (7) of the mobile frame (6) comprises a hook for enabling the object to engage with the mobile frame (6); the object preferably being a ladder.

13. The device of any one of the preceding claims, **characterised in that** the fixed frame (3) further comprises at least an engaging element (5) for associating the fixed frame (3) to a roof of a motor vehicle (2); the mobile frame (6), in the use position thereof, projecting posteriorly of the motor vehicle (2) and extending vertically with respect to a horizontal lie plane.

## Patentansprüche

1. Vorrichtung zum Tragen von Objekten, umfassend:
einen fixierten Tragerahmen (3);
einen beweglichen Rahmen (6), der mit dem fixierten Rahmen (3) verbunden ist und auf diesem zwischen einer Position der Nicht-Benutzung, in welcher der bewegliche Rahmen (6) innerhalb der Gesamtdimension des fixierten Rahmens (3) umfasst ist, und einer Position der Benutzung, in welcher der bewegliche Rahmen (6) aus dem fixierten Rahmen (3) hervorragt, wobei der bewegliche Rahmen (6) ferner mindestens einen Eingriffsabschnitt (7) zum abnehmbaren Einspannen eines Objekts auf dem beweglichen Rahmen (6) aufweist, gleitet; und
Bewegungsmittel (8), die zwischen dem beweglichen (6) und dem fixierten Rahmen (3) liegen, um den beweglichen Rahmen (6) entlang einer entsprechenden Richtung (X) zu bewegen;
**dadurch gekennzeichnet, dass** sie ferner ein absorbierendes Organ (14) zum Entgegenwirken der Bewegung des beweglichen Rahmens (6) von einer Position der Benutzung in eine Position der Nicht-Benutzung umfasst, sodass der bewegliche Rahmen (6) in der Position der Benutzung angesichts des Gewichts des Rahmens (6) und der Wirkung des absorbierenden Organs (14) bleibt.

2. Vorrichtung nach Anspruch 1, **dadurch gekennzeichnet, dass** der fixierte Rahmen (3) und der bewegliche Rahmen (6) jeweils ein erstes Ende (3a, 6a) und gegenüber dem ersten Ende (3a, 6a) ein zweites Ende (3b, 6b) aufweisen; wobei das erste Ende (6a) und das zweite Ende (6b) des beweglichen Rahmens (6) in der Position der Nicht-Benutzung jeweils am ersten Ende (3a) und am zweiten Ende (3b) des fixierten Rahmens (3) angeordnet sind, wobei das erste Ende (6a) des beweglichen Rahmens (6) in der Position der Benutzung am zweiten Ende (3b) des fixierten Rahmens (3) angeordnet ist.

3. Vorrichtung nach einem der vorangehenden Ansprüche, **dadurch gekennzeichnet, dass** der fixierte Rahmen (3) und der bewegliche Rahmen (6) in der Position der Nicht-Benutzung in entsprechenden parallelen Entwicklungsebenen und in der Positionen der Benutzung in entsprechenden transversalen Entwicklungsebenen liegen.

4. Vorrichtung nach einem der vorangehenden Ansprüche, **dadurch gekennzeichnet, dass** die Bewegungsmittel (8) einen Arm (9) umfassen, der ein erstes Ende (9a), das mit einem Rad (10) versehen ist, das auf einer Führung (11) läuft, die im beweglichen Rahmen (6) ausgebildet ist und sich entlang der Längsentwicklung des beweglichen Rahmens (6) erstreckt, und ein zweites Ende (9b) aufweist, das mit dem fixierten Rahmen (3) drehverbunden ist und um eine Achse rotiert, die transversal zur Bewegungsrichtung (X) ist; wobei der Arm (9) um die Achse zwischen einer ersten Position, die der Position der Nicht-Benutzung des beweglichen Rahmens (6) entspricht, in welcher sich der Arm (9) entlang der Lageebene des fixierten Rahmens (3) entwickelt, und einer zweiten Position, die der Position der Benutzung des beweglichen Rahmen (6) entspricht, in welcher der Arm (9) transversal aus der Lageebene des fixierten Rahmens (3) hervorragt, rotierbar ist.

5. Vorrichtung nach Anspruch 4, **dadurch gekennzeichnet, dass** die Bewegungsmittel (8) ferner ein Schubelement (12) umfassen, das mit dem fixierten Rahmen (3) und mit dem Arm (9) verbunden ist, wobei das Schubelement (12) den beweglichen Rahmen (6) von der Position der Benutzung in die Position der Nicht-Benutzung bewegt.

6. Vorrichtung nach Anspruch 5, **dadurch gekennzeichnet, dass** das Schubelement (12) eine elastische Feder (13) umfasst, aufweisend ein erstes Ende (13a), das mit dem zweiten Ende (3b) des fixierten Rahmens (3) verbunden ist und gegenüber dem ersten Ende (3a) ein zweites Ende (13b), das mit einem Mittelbereich des Arms (9), der zwischen dem ersten Ende (9a) und dem zweiten Ende (9b) des Arms (9) definiert ist, verbunden ist; wobei die Feder (13) in der Position der Benutzung des beweglichen Rahmens (6) komprimiert ist.

7. Vorrichtung nach einem der Ansprüche 4 bis 6, **dadurch gekennzeichnet, dass** die Bewegungsmittel (8) ferner einen Träger (16) umfassen, der Folgendes aufweist: ein erstes Rad (18), das am fixierten Rahmen (3) an dessen zweiten Ende (3b) angelenkt ist und in der Führung (11) des beweglichen Rahmens (6) läuft; ein zweites Rad (19), das gegenüber dem ersten Rad (18) liegt und ebenfalls entlang der Führung (11) des beweglichen Rahmens (6) läuft; sowie einen Querstab (17), der mit dem ersten Rad (18) und dem zweiten Rad (19) verbunden ist.

8. Vorrichtung nach Anspruch 7, **dadurch gekennzeichnet, dass** das absorbierende Organ (14) einen Kolben (15), der eine zylindrische Kammer (15a), die am fixierten Rahmen (3) angelenkt ist, und eine Stange (15b), die in der zylindrischen Kammer (15a) gleitbar ist und am Querstab (17) angelenkt ist, umfasst.

9. Vorrichtung nach Anspruch 8, **dadurch gekennzeichnet, dass** der Kolben (15) ein doppeltwirkender Kolben zum Bremsen der Bewegung des beweglichen Rahmens (6) von dessen Position der Nicht-Benutzung in dessen Position der Benutzung und von dessen Position der Benutzung in dessen Position der Nicht-Benutzung ist.

10. Vorrichtung nach Anspruch 8 oder 9, **dadurch gekennzeichnet, dass** in der Position der Nicht-Benutzung des beweglichen Rahmens (6) der Träger (16) an den fixierten Rahmen (3) angenähert wird, um die Stange (15b) in die zylindrische Kammer (15a) einzuführen, und in der Position der Benutzung des beweglichen Rahmens (6) der Träger (16) vom fixierten Rahmen (3) beabstandet wird, um die Stange (15b) aus der zylindrischen Kammer (15a) herauszuziehen.

11. Vorrichtung nach einem der vorangehenden Ansprüche, **dadurch gekennzeichnet, dass** der fixierte Rahmen (3) und der bewegliche Rahmen (6) eine flache Gestalt und eine im Wesentlichen rechteckige Umfangsentwicklung aufweisen.

12. Vorrichtung nach einem der vorangehenden Ansprüche, **dadurch gekennzeichnet, dass** der Eingriffsabschnitt (7) des beweglichen Rahmens (6) einen Haken aufweist, um einen Eingriff des Objekts in den beweglichen Rahmen (6) zu ermöglichen; wobei das Objekt vorzugsweise eine Leiter ist.

13. Vorrichtung nach einem der vorangehenden Ansprüche, **dadurch gekennzeichnet, dass** der fixierte Rahmen (3) ferner mindestens ein Eingriffselement (5) umfasst, um den fixierten Rahmen (3) mit einem Dach eines Kraftfahrzeugs (2) zu verbinden; wobei der bewegliche Rahmen (6) in dessen Position der Benutzung posterior des Kraftfahrzeugs (2) hervorragt und sich gegenüber einer horizontalen Lageebene vertikal erstreckt.

## Revendications

1. Dispositif de transport d'objets, comprenant :
Un châssis de soutien fixe (3) ;
un châssis mobile (6) associé au châssis fixe (3) et coulissant sur lui-même entre une position non-fonctionnelle dans laquelle le châssis mobile (6) est compris à l'intérieur de la dimension entière du châssis fixe (3) et une position fonctionnelle dans laquelle le châssis mobile (6) dépasse du châssis fixe (3), le châssis mobile (6) présentant de plus au moins une partie d'engagement (7) pour contraindre de façon amovible un objet sur le cadre mobile (6) ; et
des moyens assurant le mouvement (8) interposés entre le châssis mobile (6) et le châssis fixe (3) afin de déplacer le châssis mobile (6) le long d'une direction correspondante (X) ;
**caractérisé en ce qu'**il comprend de plus un organe d'absorption (14) pour s'opposer au déplacement du châssis mobile (6) d'une position fonctionnelle à une position non-fonctionnelle, de sorte que le châssis mobile (6) reste dans la position fonctionnelle en raison du poids du châssis (6) lui-même et de l'action de l'organe d'absorption (14).

2. Dispositif selon la revendication 1, **caractérisé en ce que** le châssis fixe (3) et le châssis mobile (6) présentent respectivement une première extrémité (3a, 6a) et une seconde extrémité (3b, 6b) opposée à la première extrémité (3a, 6a) : le châssis mobile (6), dans la position non-fonctionnelle, ayant la première extrémité (6a) et la seconde extrémité (6b) disposées respectivement au niveau de la première extrémité (3a) et de la seconde extrémité (3b) du châssis fixe (3), le châssis mobile (6), dans la position fonctionnelle, ayant la première extrémité (6a) disposée au niveau de la seconde extrémité (3b) du châssis fixe (3).

3. Dispositif selon l'une quelconque des revendications précédentes, **caractérisé en ce que** le châssis fixe (3) et le châssis mobile (6) se trouvent sur des plans de développement respectifs étant parallèles dans la position non-fonctionnelle et sur des plans de développement transversaux respectifs dans la position fonctionnelle.

4. Dispositif selon l'une quelconque des revendications précédentes, **caractérisé en ce que** les moyens assurant le mouvement (8) comprennent un bras (9) présentant une première extrémité (9a) pourvue d'une roue (10) évoluant sur un guide (11) présent dans le châssis mobile (6) et se développant le long du développement longitudinal du châssis mobile (6), et une seconde extrémité (9b) associée en rotation au châssis fixe (3) et tournant autour d'un axe, ledit axe étant transversal à la direction de déplacement (X) ; le bras (9) pouvant tourner autour de l'axe entre une première position, correspondant à la position non-fonctionnelle du châssis mobile (6), dans laquelle le bras (9) se développe le long du plan d'appui du châssis fixe (3), et une seconde position correspondant à la position fonctionnelle du châssis mobile (6), dans laquelle le bras (9) se développe transversalement à partir du plan d'appui du châssis fixe (3).

5. Dispositif selon la revendication 4, **caractérisé en ce que** les moyens assurant le mouvement (8) comprennent de plus un élément de poussée (12) associé au châssis fixe (3) et au bras (9), ledit élément de poussée (12) déplaçant le châssis mobile (6) de la position fonctionnelle à la position non-fonctionnelle.

6. Dispositif selon la revendication 5, **caractérisé en ce que** l'élément de poussée (12) comprend un ressort élastique (13) disposant d'une première extrémité (13a) étant associée à la seconde extrémité (3b) du châssis fixe (3) et une seconde extrémité (13b), opposée à la première extrémité (3a), étant associée à une zone médiane du bras (9) définie entre la première extrémité (9a) et la seconde extrémité (9b) du bras (9) ; le ressort (13) étant comprimé dans la position fonctionnelle du châssis mobile (6).

7. Dispositif selon l'une quelconque des revendications de 4 à 6, **caractérisé en ce que** les moyens assurant le mouvement (8) comprennent de plus un chariot (16) présentant : une première roue (18) montée pivotante au châssis fixe (3) au niveau de la seconde extrémité (3b) et évoluant dans le guide (11) du châssis mobile (6) ; une seconde roue (19) opposée à la première roue (18) et évoluant aussi le long du guide (11) du châssis mobile (6) ; ainsi qu'une traverse (17) associée à ladite première roue (18) et à ladite seconde roue (19).

8. Dispositif selon la revendication 7, **caractérisé en ce que** l'organe d'absorption (14) comprend un piston (15) présentant une chambre cylindrique (15a) montée pivotante au châssis fixe (3) et une tige (15b) pouvant coulisser dans la chambre cylindrique (15a) et montée pivotante sur la traverse (17).

9. Dispositif selon la revendication 8, **caractérisé en ce que** le piston (15) est un piston à double effet pour freiner le déplacement du châssis mobile (6) de la position non-fonctionnelle à la position fonctionnelle et de la position fonctionnelle à la position non-fonctionnelle.

10. Dispositif selon les revendications 8 ou 9, **caractérisé en ce que** dans la position non-fonctionnelle du châssis mobile (6), le chariot (16) est rapproché du châssis fixe (3) afin d'insérer la tige (15b) dans la chambre cylindrique (15a), et dans la position fonctionnelle du châssis mobile (6), le chariot (16) est éloigné du châssis fixe (3) afin d'extraire la tige (15b) de la chambre cylindrique (15a).

11. Dispositif selon l'une quelconque des revendications précédentes, **caractérisé en ce que** le châssis fixe (3) et le châssis mobile (6) présentent une conformation plate et un développement périphérique substantiellement rectangulaire.

12. Dispositif selon l'une quelconque des revendications précédentes, **caractérisé en ce que** la partie d'engagement (7) du châssis mobile (6) comprend un crochet pour permettre à l'objet de se mettre en prise avec le châssis mobile (6) ; l'objet étant, de préférence, une échelle.

13. Dispositif selon l'une quelconque des revendications précédentes, **caractérisé en ce que** le châssis fixe (3) comprend de plus au moins un élément d'engagement (5) pour associer le châssis fixe (3) au toit d'un véhicule motorisé (2) ; le châssis mobile (6), dans la position fonctionnelle, dépassant à l'arrière du véhicule motorisé (2) et se développant verticalement par rapport à un plan d'appui horizontal.
